# EUROPÄISCHE PATENTANMELDUNG

(11) **EP 1 494 152 A1**
(43) Veröffentlichungstag der Anmeldung: **05.01.2005**
(21) Anmeldenummer: 03015131.0
(22) Anmeldetag: 04.07.2003
(51) Int. Cl.: G06F 17/60

(54) **Verfahren zum Speichern und Abrufen von Informationsdaten zu diskreten Produkten eines Serientyps**

(71) Anmelder: ads-tec AUTOMATION DATEN- UND SYSTEMTECHNIK GmbH, 70711 Leinfelden-Echterdingen (DE)
(72) Erfinder: Speidel, Markus, 71706 Markgröningen (DE); Speidel, Thomas, 71706 Markgröningen (DE)
(74) Vertreter: Wasmuth, Rolf, Dipl.-Ing.

(57) **Zusammenfassung**

Die Erfindung betrifft ein Verfahren zum Abspeichern Abrufen von Informationsdaten zu diskreten Produkten einer Serie wie z.B. Computer, wobei ein diskretes Produkt (A1,B1,C1,D1) einzelne zugeordnete Artikel enthält. Die Informationsdaten zum Produkt (A1,B1,C1,D1) werden in einem Datenspeicher (12) einer Datenverarbeitungsanlage (11) abgespeichert, wozu der Datenspeicher (12) in mehrere Produktspeicher (A,B,C,D) und mehrere Artikelspeicher (a,b,c,d) aufgeteilt ist. Jedem einzelnen Produktspeicher (A,B,C,D) wird eine Vielzahl von nur diesem Produktspeicher (A,B,C,D) fest zugeordneten Produktspeicherplätzen (40,41,42,43,44) zugeteilt. In gleicher Weise werden jedem Artikelspeicher (a,b,c,d) eine Vielzahl von diesem einzelnen Artikelspeicher (a,b,c,d) fest zugeordneten Artikelspeicherplätzen (50,51,52,53,54) zugeteilt. Jedem Produktspeicher (A,B,C,D) wird ein einziges konkretes individuelles Produkt (A1,B1,C1,D1) zugeordnet und jedem Artikelspeicher (a,b,c,d) wird ein konkreter, individueller Artikel zugeordnet. Auf den Produktspeicherplätzen (40,41,42,43,44) sind individuelle, nur für das zugeordnete Produkt (A1,B1,C1,D1) des Produktspeichers (A,B,C,D) gültige Informationen abgelegt, während auf den Artikelspeicherplätzen (40,41,42,43,44) individuelle, nur für den zugeordneten Artikel des Artikelspeichers (a,b,c,d) gültige Informationen abgelegt werden.

## Beschreibung

Die Erfindung betrifft ein Verfahren zum Speichern und Abrufen von Informationsdaten von diskreten Produkten eines Serientyps, z. B. Kraftfahrzeugen, Maschinen, Datenverarbeitungsanlagen oder dgl. nach dem Oberbegriff des Anspruchs 1.

Moderne technische Geräte wie Steuerungen, Fertigungsanlagen, Computer oder dgl. bestehen aus einer Vielzahl einzelner Baugruppen, die regelmäßig von unterschiedlichen Lieferanten bezogen und vom Hersteller zu dem gewünschten diskreten Produkt zusammengefügt werden. Auftretende Kompatibilitätsprobleme können zu Störungen führen, die die Tauglichkeit des diskreten Produktes einschränken. Moderne Produkte sind derart komplex, daß auch sorgsam ausgewählte einzelne Artikel in nicht vorhersehbaren Betriebszuständen Störungen im Gesamtsystem auslösen können. Dabei kann ein Artikel älterer Bauart problemlos arbeiten, während eine neuere, leicht modifizierte Bauart in der Gesamtstruktur des diskreten Produktes erhebliche Funktionsstörungen auslösen kann.

Auch wenn in der modernen Fertigung durch Qualitätsmanagement und durch Qualitätssicherung ein hoher Fertigungsstandard erzielt ist, müssen in der Praxis immer wieder Fehler an ausgelieferten Produkten behoben werden, die erst nach erheblichen Stückzahlen festgestellt werden. Bei Kraftfahrzeugen führt dies regelmäßig zur aufwendigen Rückrufaktion, insbesondere dann, wenn sicherheitsrelevante Teile betroffen sind.

Der Erfindung liegt die Aufgabe zugrunde, ein Verfahren zum Speichern und Abrufen von Informationen diskreter Produkte anzugeben, mit dem bei vertretbarem Speicheraufwand und hoher Speicherdichte eine Vielzahl von Informationen zu den Produkten wie zu den Serientypen leicht zugänglich abzuspeichern ist.

Die Aufgabe wird nach den kennzeichnenden Merkmalen des Anspruchs 1 gelöst.

Der Kerngedanke der Erfindung besteht darin, einen verfügbaren Datenspeicher in einen Produktspeicher und einen Typspeicher aufzuteilen, wobei der Produktspeicher in mehrere Produktspeicherplätze und der Typspeicher in mehrere Typspeicherplätze unterteilt wird. Jedem Produktspeicherplatz wird ein konkretes, individuelles Produkt - vorzugsweise mit der individuellen Seriennummer - fest zugeordnet, während alle Informationen betreffend die Serie des konkreten individuellen Produktes auf einem zugeordneten Typspeicherplatz abgelegt werden. Auf dem Produktspeicherplatz liegen somit individuelle, für das diskrete Produkt gültige Informationen, während auf den Typspeicherplätzen allgemeine, für den zugehörigen Serientyp gültige Informationen eingeschrieben sind. So enthalten Typspeicherplätze Informationen z. B. zu Baugruppen einer Serie, die für mehrere Produkte gelten. Diese Informationen des Typspeicherplatzes werden dann nur den individuellen Produktspeicherplätzen zur Verfügung gestellt, die eine Verwendung der entsprechenden Baugruppe anzeigen. Die zu dem Serientyp eines Produktes auf den Typspeicherplatz abgelegten Serieninformationen werden somit den Produktspeicherplätzen abrufbar zur Verfügung gestellt.

Auf diese Weise ist der Speicherplatzbedarf für die einem konkreten Produkt zugeordneten Informationen aufgrund der Verknüpfung mit den Typspeicherplätzen einer Serie reduziert, so daß bei gleichem Informationsgehalt ein rascher Zugriff auf alle einem diskreten individuellen Produkt zugeordneten Daten möglich ist. Der abzuspeichernde Datenumfang ist reduziert, ohne daß die Information zu einem individuellen Produkt eingeschränkt ist. Darüberhinaus wirken sich Änderungen im Typspeicher auf alle dem Typspeicher zugeordneten Produkte aus, so daß keine Inkonsistenzen entstehen können.

Jeder Produktspeicherplatz ist mit einem, und nur mit einem Typspeicherplatz verknüpft, während jeder Typspeicherplatz mit mehreren Produktspeicherplätzen verknüpft sein kann.

Die auf einem Produktspeicherplatz zu einem Produkt abgelegten Informationen können aus Unterprodukten auf weiteren Produktspeicherplätzen zusammengesetzt sein, ebenso wie ein Serientyp auf einem Typspeicherplatz aus Unterserientypen auf weiteren Typspeicherplätzen zusammengesetzt sein kann. Das individuelle, diskrete Produkt kann ebenso wie ein Serientyp rekursiv aus mehreren Produktspeicherplätzen bzw. Typspeicherplätzen aufgebaut sein.

Vorteilhaft wird einem Produktspeicherplatz zumindest ein produktspezifischer Informationsspeicherplatz zugeordnet, in dem dem individuellen Produkt zugewiesene weitere Informationsdaten abgelegt sind. Auf je einem ausgewiesenen Datenspeicherplatz ist ein zugeordneter Informationsblock abgelegt, so z.B. auf einem Datenspeicherplatz ein Informationsblock zur Produktstruktur, auf einem anderen Datenspeicherplatz ein Informationsblock zu bei dem Prudukt aufgetretenen Fehlern, auf weiteren Datenspeicherplätzen Informationsblöcke zu Kommentaren, Prüfprotokollen, Produktsoftware oder Produktinfo.

Entsprechend kann ein oder jeder Typspeicherplatz einen typspezifischen Informationsspeicherplatz aufweisen, in dem dem Serientyp zugewiesene Informationsdaten eingeschrieben sind. So kann ein Datenspeicherplatz für die Artikelstruktur, ein Datenspeicherplatz für Zubehör, ein Datenspeicherplatz für Dokumentation, für Prüfanweisungen oder zu Artikelinfos vorgesehen werden.

In besonderer Ausgestaltung der Erfindung wird insbesondere nach Auslieferung und Inbetriebnahme des Produktes ein festgestellter Fehler auf dem Fehlerspeicherplatz des dem Produktspeicherplatz zugeordneten Informationsspeicherplatzes abrufbar protokolliert. Zweckmäßig werden die Fehlerspeicherplätze mehrerer Produktspeicherplätze von einem Auswertemodul ausgelesen, wobei das Auswertemodul die aus den Speicherplätzen ausgelesenen Informationsdaten auswertet und Summeninformationen generiert. Diese Summeninformationen können den Produktspeicherplätzen und/oder den Typspeicherplätzen auslesbar zur Verfügung gestellt werden, vorteilhaft in entsprechenden Datenspeicherplätzen abgelegt werden. Dies ermöglicht nicht nur Fehlerstatistiken, sondern auch die Angabe von Ausfallwahrscheinlichkeiten. Wenn z. B. die Festplatte verschiedener diskreter PCs nach einer bestimmten Betriebszeit ausfällt, wird dies von der Zentraleinheit bei der Auswertung der entsprechenden Fehlerspeicherplätze verschiedener Produktspeicher festgestellt und als Summeninformation gespeichert. Bei Produkten mit gleichem Festplattentyp kann so frühzeitig empfohlen werden, die Festplatte vorbeugend auszutauschen.

Bevorzugt ist die Datenverarbeitungsanlage ein Zentralrechner an einem beliebigen Ort, der insbesondere über ein Netzwerk wie das Internet oder ein Intranet einen derartigen weltweiten Zugriff erlaubt, daß die Notwendigkeit der Installation einer lokalen Software entfällt. Im Zentralrechner werden entsprechend den Informationen auf den Produktspeicherplätzen und den Typspeicherplätzen die einem Benutzer zugeteilten Zugriffsrechte überprüft und - bei positivem Ergebnis - dem Benutzer Zugang gewährt. Es kann zweckmäßig sein, jedes Produkt online mit dem zugewiesenen Produktspeicher zu verbinden, so daß jeweils bei Inbetriebnahme des Produktes oder bei einem vorgegebenen festen Zeitpunkt ein Abgleich mit den Informationen im Produktspeicher erfolgt. Diese automatisierte Datenübermittlung gewährleistet eine hohe Aktualität der Dateninformationen auf dem Zentralrechner.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind.

Es zeigen:
- Fig. 1: in schematischer Darstellung eine beispielhafte Übersicht auf eine Datenverarbeitungsanlage mit einem Datenspeicher für Informationsdaten,
- Fig. 2: in schematischer Darstellung den Aufbau des Datenspeichers in Unterteilung Produktspeicher/Typspeicher,
- Fig. 3: in schematischer Darstellung den Aufbau eines Informationsspeichers zu einem Typspeicherplatz,
- Fig. 4: in schematischer Darstellung den Aufbau eines Informationsspeichers zu einem Produktspeicherplatz,
- Fig. 5: in schematischer Darstellung die Verknüpfung eines Produktspeicherplatzes für ein diskretes Produkt mit dem Typspeicherplatz einer entsprechenden Geräteserie.

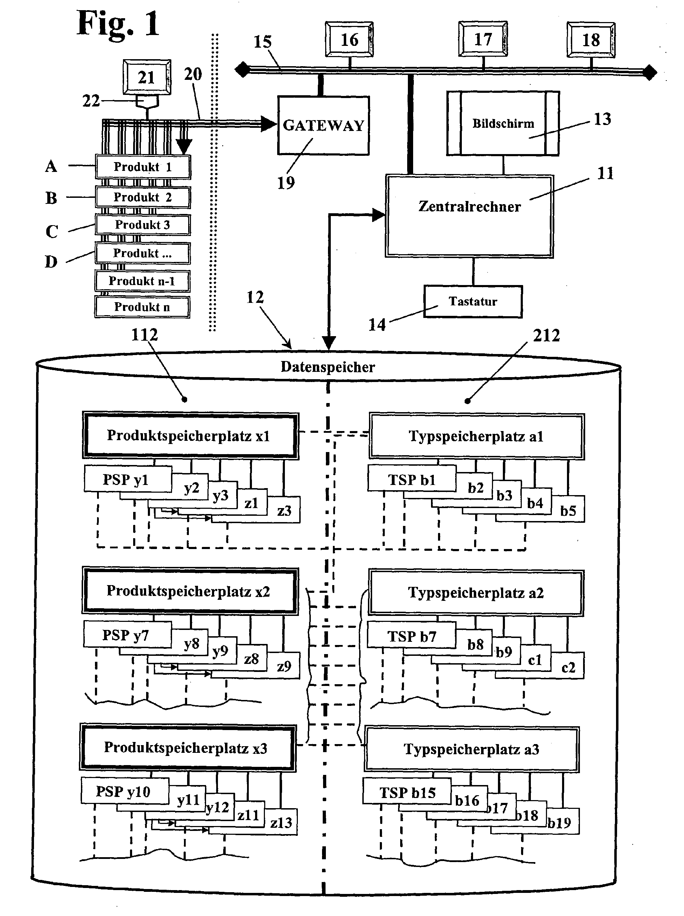

Die in Fig. 1 dargestellte Datenverarbeitungsanlage weist einen Zentralrechner 11 auf, der in bekannter Weise über eine Tastatur 14 und einen Bildschirm 13 zu bedienen ist. Der Zentralrechner 11 greift auf einen Datenspeicher 12 zu, der als Massenspeicher vorgesehen ist und in einen Produktspeicher 112 sowie einen Typspeicher 212 aufgeteilt ist. Der Zentralrechner 11 ist ferner mit einem Datennetz 15, z. B. einem LAN-Netzwerk verbunden. Über das LAN-Netzwerk kann von Workstations 16, 17, 18 auf den Zentralrechner zugegriffen werden.

Das LAN-Netzwerk steht ferner über ein Gateway 19 mit einem externen Netzwerk 20 in Verbindung, so daß auch externe Workstations 21 über ein externes Netzwerk 20 wie das Internet auf den Zentralrechner 11 und den Datenspeicher 12 Zugriff haben.

Der Datenspeicher 12 ist in Speicherplätze unterteilt, wobei eine erste Anzahl Speicherplätze xₙ, yₙ, zₙ, wₙ dem Produktspeicher 112 zugeordnet sind und eine zweite Anzahl Speicherplätze aₙ, bₙ, cₙ, dₙ dem Typspeicher 212 zugeordnet sind.

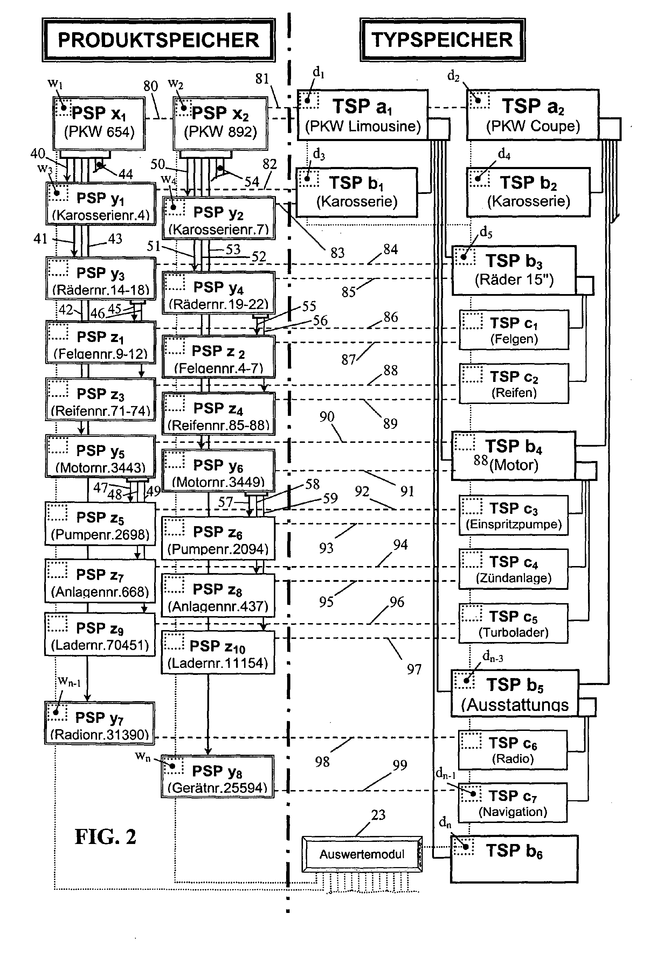

Wie im einzelnen in Fig. 2 dargestellt, wird im Produktspeicher jedem diskreten Produkt ein nur diesem diskreten Produkt zugeordneter Produktspeicherplatz zugewiesen, auf dem individuelle, nur für dieses diskrete Produkt gültige Informationen abgelegt werden. Auf den Typspeicherplätzen aₙ, bₙ, cₙ, dₙ werden allgemeine, nur für den zugeordneten Serientyp gültige Informationen abgelegt. Am Beispiel eines Produktes PKW ist der Aufbau des Datenspeichers in Fig. 2 wiedergegeben. Auf dem Typenspeicherplatz TSP a₁ werden serienspezifische Informationen zu einem PKW abgelegt, wobei die verschiedenen Baugruppen des PKWs als Untertypen in entsprechend zugeordnete Typspeicherplätze b₁, b₂, b₃ und b₄ abgelegt werden. Der Typenspeicherplatz TSP b₁ betrifft die Produktkarosserie, der Typspeicherplatz b₂ z. B. die Räder, der Typspeicherplatz b₃ den Motor und der Typspeicherplatz b₄ z. B. ein mögliches Ausstattungspaket. Sofern erforderlich, sind den Untertypspeicherplätzen bₙ weitere Speicherplätze cₙ untergeordnet, so z. B. dem Typspeicherplatz b₂ (Räder) die weiteren Typspeicherplätze c₁ (Felgen) und c₂ (Reifen). Entsprechend sind dem Typspeicherplatz b₃ (Motor) der Typspeicherplatz c₃ für die Baugruppe Einspritzpumpe, der Typspeicherplatz c₄ für die Baugruppe Zündanlage und der Typspeicherplatz c₅ für die Baugruppe Turbolader zugeordnet. Dem Typspeicherplatz b₄ Ausstattungspaket können die Typspeicherplätze c₆ (Radio) und c₇ (Navigation) zugeordnet sein.

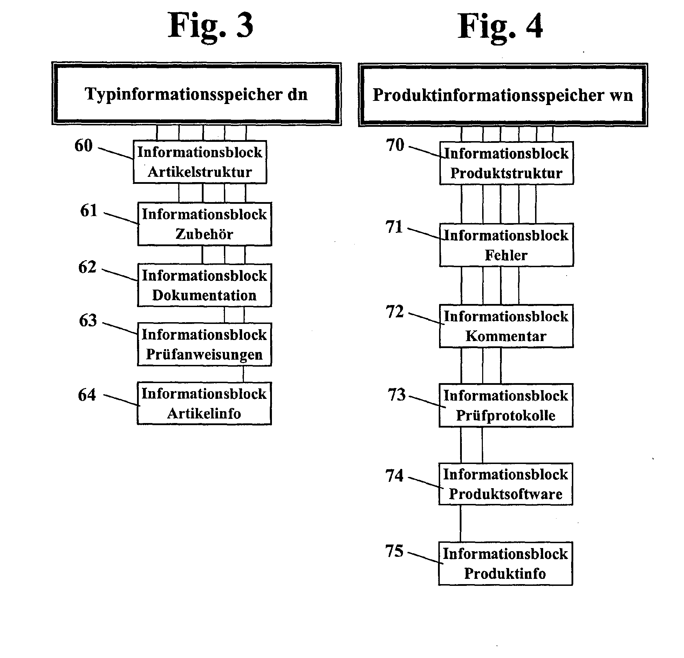

Einigen Typspeicherplätzen aₙ, bₙ, cₙ oder auch jedem dieser Speicherplätze kann ein Informationsspeicher dₙ zugeordnet sein, der seinerseits in Speicherplätze für unterschiedliche Datengruppen unterteilt sein kann. Wie in Fig. 3 dargestellt, kann ein Typinformationsspeicher dₙ einen Informationsblock 60 für die Artikelstruktur, die aus einer Liste bestehen kann aus welchen Untertypen der Typ selbst besteht. Ein Informationsblock 61 für Zubehör enthält z. B. eine Liste, welche Typen als Zubehör passend sind. Dies kann auch Software sein, die ja selbst auch als Typ abgelegt ist. Im Informationsblock 62 für Dokumentation werden z. B. Bedienungsanleitungen, Reparaturanleitungen, Wartungsanleitungen und/oder Aufbauanleitungen für die Herstellung abgelegt. Der Informationsblock 63 für Prüfanweisungen enthält die Anweisungen, nach denen ein solches Gerät geprüft werden muß. Das Ergebnis einer durchgeführten Prüfung wird als Prüfprotokoll im Produktspeicher abgelegt, wie nachfolgend noch erläutert wird. Ein Informationsblock 64 für Artikelinfos kann Informationen zu diesem Typ wie Bestellnummer, Bezeichnung, Name o. dgl. enthalten.

Der Produktspeicher 112 ist ähnlich dem Typspeicher 212 aufgebaut. Jedem diskreten Produkt ist ein und nur ein Produktspeicherplatz xₙ, yₙ, zₙ zugeordnet, wobei der Aufbau in gleicher Weise wie beim Typspeicher 212 rekursiv sein kann. So ist auf dem Produktspeicherplatz x₁ ein PKW mit der Seriennummer 654 abgespeichert, der über entsprechende Verknüpfungen 40 bis 44 mit weiteren Produktspeicherplätzen yₙ und zₙ verbunden ist. Im Ausführungsbeispiel ist dem PKW mit der Seriennr. 654 eine Karosserie mit der Nr. 4 zugeordnet, deren Daten auf dem Produktspeicherplatz y₁ abgespeichert sind. Der PKW ist ferner mit Rädern der Seriennr. 14 bis 18 ausgestattet, welche - verknüpft über die Verknüpfung 45 und 46 - mit Unterproduktspeicherplätzen z₁ und z₃ in Verbindung stehen. Der Produktspeicherplatz z₁ enthält die Informationen zu den Felgen mit den Seriennrn. 9 bis 12, während der Produktspeicherplatz z₃ Informationen zu den Reifen mit den Nrn. 71 bis 74 enthält. Unmittelbar mit dem Produktspeicherplatz x₁ ist der Produktspeicherplatz y₅ verknüpft, der die Informationen zum Motor mit der Seriennr. 3443 enthält. Dem Produktspeicherplatz y₅ für den diskreten Motor Nr. 3443 sind die weiteren Produktspeicherplätze z₅, z₇ und z₉ zugeordnet, die über Verknüpfungen 47, 48 und 49 mit dem Produktspeicherplatz y₅ verbunden sind. Der Produktspeicherplatz z₅ enthält die Informationen zur Einspritzpumpe mit der Seriennr. 2698; entsprechend enthält der Produktspeicherplatz z₇ die Informationen zur Zündanlage mit der Seriennr. 668 und der Produktspeicherplatz z₉ die Informationen zum Abgasturbolader mit der Seriennr. 70451. Dem Produktspeicherplatz x₁ ist der Produktspeicherplatz y₇ mit den Informationen zu einem eingebauten Radio mit der Seriennr. 31390 direkt zugeordnet.

Entsprechend ist auf dem Produktspeicherplatz x₂ ein PKW mit der Seriennr. 8902 und den entsprechenden Daten abgespeichert, die wiederum über Verknüpfungen 50 bis 59 mit entsprechenden Produktspeicherplätzen verknüpft sind. Auf den Produktspeicherplätzen xₙ, yₙ und zₙ werden die diskreten Informationen zu dem jeweiligen individuellen Produkt abgelegt, wobei jedem Produktspeicherplatz zumindest ein produktspezifischer Informationsspeicherplatz wₙ zugewiesen ist, auf dem die dem bestimmten einzelnen Produkt zugeordneten Informationsdaten abgespeichert sind. In Fig. 4 ist ein derartiger Informationsspeicher wₙ eines Produktspeicherplatzes xₙ, yₙ, zₙ schematisch wiedergegeben.

Ein Speicherplatz 70 ist für einen Informationsblock für die Produktstruktur vorgesehen, z. B. für eine Liste, aus welchen Unterprodukten das Produkt besteht. Der Speicherplatz 71 wird z. B. mit einem Informationsblock für bei dem Produkt aufgetretene Fehler verwendet, so daß nach Auslieferung und Inbetriebnahme des Produktes auf dem jeweiligen Produktspeicherplatz xₙ, yₙ, zₙ Informationen zu festgestellten Fehlern abgelegt sind. Die Ablage erfolgt so, daß über ein Auswertemodul 23 der Speicherplatz 71 'Fehler' ausgelesen werden kann, um so z. B. als Summeninfo den Informationsspeichern dₙ der Typspeicherplätze zur Verfügung gestellt zu werden. Auf dem Speicherplatz 72 ein kann Informationsblock mit Kommentardaten abgespeichert werden. Derartige Kommentare können z. B. vom Benutzer oder Kunden stammen und auch Bilder, Sounddateien, Videos oder andere Dokumente enthalten. Auf dem Speicherplatz 73 ist ein Informationsblock Prüfprotokolle abgelegt, also eine Liste der an diesem diskreten Produkt durchgeführten Prüfschritte mit deren Ergebnissen. Die auf dem konkreten Produkt installierte Anwendersoftware, Betriebssoftware, Firmware und/oder andere Software kann in dem Informationsblock des Speicherplatzes 74 abgelegt werden. Der Speicherplatz 75 enthält Produktinfos wie z.B. Seriennummer, Herstellungsdatum, zugeordneter Fertigungsauftrag oder Ähnliches. Auch ist hier der Verweis auf den zugehörigen Typ abgelegt.

Die so strukturierten Speicherplätze xₙ, yₙ, zₙ, wₙ des Produktspeichers 112 und die Speicherplätze aₙ, bₙ, cₙ, dₙ des Typspeichers 212 sind untereinander derart verknüpft, daß die zu dem Serientyp eines Produktes auf Typspeicherplätzen aₙ, bₙ, cₙ abgelegten Informationen von den Produktspeicherplätzen xₙ, yₙ, zₙ abgerufen werden können. Dies bedeutet, daß ein Benutzer bei Zugriff z. B. auf den Produktspeicherplatz z₁₀ nicht nur die Informationen zum Lader der Seriennr. 11154 abrufen kann, sondern auch die dem Serientyp des benutzten Turboladers entsprechenden Informationen vom Typspeicherplatz c₅ auslesen kann. Dem Benutzer steht so bei Zugriff auf einen Speicherplatz jede ihm zur Wartung, Reparatur oder sonstige Tätigkeit notwendige Information direkt zur Verfügung.

Jeder einzelne Produktspeicherplatz xₙ, yₙ, zₙ ist über eine Verknüpfung 80 bis 98 mit einem einzigen zugeordneten Typspeicherplatz aₙ, bₙ, cₙ fest verknüpft. Alle Informationen des Typspeicherplatzes stehen somit dem entsprechenden Produktspeicherplatz direkt auslesbar zur Verfügung. Jeder Typspeicherplatz aₙ, bₙ, cₙ ist hingegen mit mehreren Produktspeicherplätzen xₙ, yₙ, zₙ verknüpft, da zu einem Serientyp immer mehrere diskrete Produkte mit unterschiedlichen Seriennummern zählen. Der Typspeicherplatz aₙ, bₙ, cₙ ist somit mit den diskreten einzelnen Produkten aus den Produktspeicherplätzen cₙ, yₙ und zₙ verknüpft.

Die entsprechenden Daten für die Typspeicherplätze werden von einem Benutzer eingegeben oder werden aus einer vorhandenen Typdatenbank importiert. Entsprechend können die Daten auf den Produktspeicherplätzen vom Benutzer (z.B. bei der Montage) manuell eingegeben oder eingescannt werden oder auch durch eine Online-Anbindung des Produktes an den Zentralrechner automatisch eingepflegt werden. So ist es möglich, die Produkte A, B, C, D über das Netz 20 unmittelbar an den Zentralrechner anzuschließen und von diesem die entsprechenden Produktspeicherplätze anzusteuern. So können auch die als Workstation genutzten Datenverarbeitungsanlagen 16, 17, 18, 21 als diskretes Produkt im Datenspeicher 12 abgespeichert sein. Beispielhaft ist das für die Workstation 21 gezeigt, die bei jeder Inbetriebnahme des PCs Daten über ein Gateway 22 und das Netz 20 an den Zentralrechner 11 weitergibt, so daß jede Reparatur, jedes Update einer Software, jede Störung sofort protokolliert, an den Zentralrechner 11 weitergegeben und auf den zugeordneten Produktspeicherplätzen xₙ, yₙ, zₙ, wₙ abgelegt wird. Bei einer derartigen automatisierten Anbindung z. B. der Workstation 21 kann auch bei jeder Inbetriebnahme gleich über das Netz überprüft werden, ob zu der jeweiligen Serie der im Gerät verbauten Produkte Typrevisionen vorhanden sind, die dann bei Bedarf abgerufen und ausgeführt werden können.

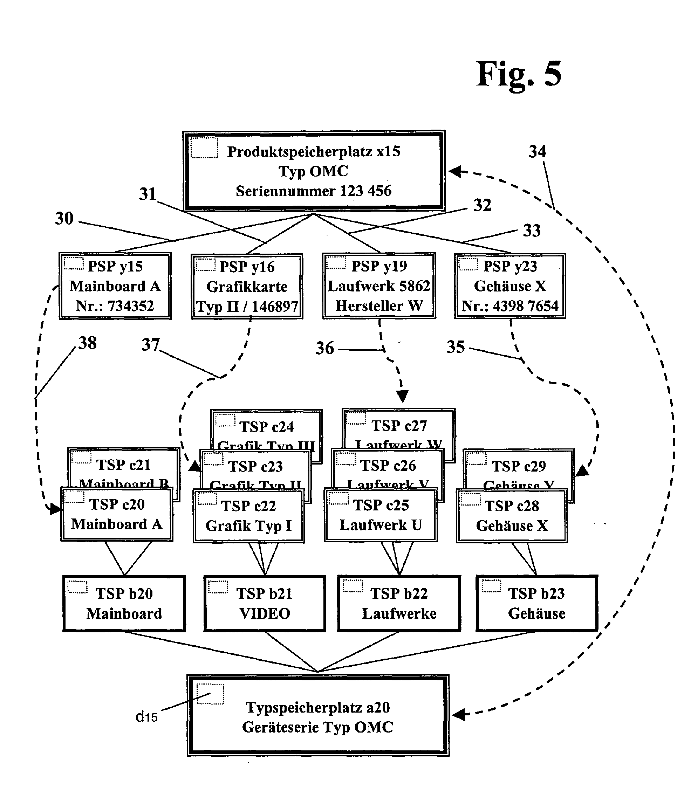

In Fig. 5 ist am Beispiel des Aufbaus eines Computers das erfindungsgemäße Verfahren dargestellt. Der diskrete Produktspeicherplatz PSP x₁₅ ist dem Gerätetyp OMC mit der Seriennummer 123456 zugeordnet. Auf dem Informationsspeicherplatz w₁₅ liegen die Produktinformationsdaten wie z. B. die Produktstruktur und die Verweise auf die im Gerät enthaltenen Teilprodukte. So ist im oben gezeigten Beispiel eine Verknüpfung 30 mit dem Produktspeicherplatz y₁₅ für ein Mainboard A mit der Seriennr. 734352 abgespeichert, ebenso wie die Verknüpfungen 31, 32 und 33 zu den Produktspeicherplätzen y₁₆ zur Grafikkarte Typ 11/146897, zum Produktspeicherplatz y₁₇ zum Laufwerk 5862 des Herstellers W sowie auf dem Produktspeicherplatz y₁₈ zum Gehäuse x mit der Seriennr. 43987654.

Auf den Produktspeicherplätzen y₁₅, y₁₆, y₁₇ und y₁₈ liegen ausschließlich die Informationen zu diesen diskreten Produkten vor; weitergehende Informationen werden durch Verknüpfungen 34 bis 38 abrufbar zur Verfügung gestellt, wozu die jeweiligen Produktspeicherplätze x₁₅, y₁₅, y₁₆, y₁₇ und y₁₈ mit den entsprechenden Typspeicherplätzen des Typspeichers verbunden sind. Der Typspeicherplatz TSP a₂₀ enthält die Information zur Geräteserie OMC, wobei auf dem Informationsspeicherplatz d₁₅ Informationen entsprechend Fig. 3 abgelegt sind. Entsprechend der Struktur des Serientyps sind Verknüpfungen mit den Produktspeicherplätzen b₂₀ für Mainboards, b₂₁ für den Videobereich, b₂₂ für Laufwerke und b₂₃ für Gehäuse vorgesehen. Den Produktspeicherplätzen b₂₀ bis b₂₃ sind entsprechende weitere Produktspeicherplätze c₂₀ bis c₂₉ zugeordnet, die wiederum jeweils einzelne Serientypen zu Mainboards, Grafikkarten, Laufwerken und Gehäuse enthalten.

Bei Zugriff auf den diskreten Produktspeicher PSP x₁₅ können die dem Mainboard A mit der Nr. 734352 auf dem Produktspeicherplatz y₁₅ abgelegten diskreten Informationen des Mainboards ausgelesen werden. Die zugehörigen allgemeinen Serieninformationen des allgemeinen Typs können über die Verknüpfung 38 aus dem zugehörigen Typspeicherplatz b₂₀ ausgelesen werden. Entsprechend werden die diskreten Informationen zur Grafikkarte Typ 11/146897 aus dem zugehörigen Produktspeicherplatz y₁₆ ausgelesen, wobei die allgemeinen Informationen wiederum über die Verknüpfung 37 aus dem Typspeicherplatz b₂₃ ausgelesen werden können. In gleicher Weise sind die weiteren Speicherplätze des Produktspeichers und des Typspeichers miteinander verbunden.

## Patentansprüche

1. Verfahren zum Abspeichern und Abrufen von Informationsdaten zu diskreten Produkten eines Serientyps, z.B. Kraftfahrzeugen, Maschinen, Datenverarbeitungsanlagen oder dgl., wobei jedes diskrete Produkt einem Serientyp zugeordnet ist und die Informationsdaten zum diskreten Produkt sowie die Informationsdaten zum Serientyp in einem Datenspeicher (12) einer Datenverarbeitungsanlage abgespeichert werden,
- wobei der Datenspeicher (12) in einen Produktspeicher (112) und einen Typspeicher (212) aufgeteilt wird,
- und der Produktspeicher (112) in mehrere Produktspeicherplätze (xₙ, yₙ, zₙ) sowie der Typspeicher (212) in mehrere Typspeicherplätze (aₙ, bₙ, cₙ) unterteilt wird,
- und jedem Serientyp ein eben diesem Serientyp zugeordneter Typspeicherplatz (aₙ, bₙ, cₙ) fest zugeordnet wird,
- und jedem diskreten Produkt ein nur diesem diskreten Produkt zugeordneter Produktspeicherplatz (xₙ, yₙ, zₙ) fest zugeordnet wird,
- und auf einem Produktspeicherplatz (xₙ, yₙ, zₙ) individuelle, nur für das diskrete Produkt gültige Informationen abgelegt werden,
- und auf den Typspeicherplätzen (aₙ, bₙ, cₙ) allgemeine, nur für den zugeordneten Serientyp gültige Informationen abgelegt werden,
- und Produktspeicherplätze (xₙ, yₙ, zₙ) mit Typspeicherplätzen (aₙ, bₙ, cₙ) derart verknüpft werden, daß die zu dem Serientyp eines Produktes auf Typspeicherplätzen (aₙ, bₙ, cₙ) abgelegten Informationen für die Produktspeicherplätze (xₙ, yₙ, zₙ) abrufbar zur Verfügung stehen.

2. Verfahren nach Anspruch 1,
**dadurch gekennzeichnet, daß** ein Produktspeicherplatz (xₙ, yₙ, zₙ) mit einem und nur einem Typspeicherplatz (an, bn, cₙ) verknüpft wird.

3. Verfahren nach Anspruch 1 oder 2,
**dadurch gekennzeichnet, daß** ein Typspeicherplatz (an, bₙ, cₙ) mit einem oder mehreren Produktspeicherplätzen (xₙ, yn, zₙ) verknüpft wird.

4. Verfahren nach einem der Ansprüche 1 bis 3,
**dadurch gekennzeichnet, daß** ein Produkt auf einem Produktspeicherplatz (xₙ) aus Unterprodukten auf Produktspeicherplätzen (yₙ, zₙ) und/oder ein Serientyp auf einem Typspeicherplatz (aₙ) aus Unterserientypen auf Typspeicherplätzen (bₙ, cₙ) zusammengesetzt wird, d. h. daß ein Produkt und/oder ein Serientyp rekursiv aufgebaut wird.

5. Verfahren nach einem der Ansprüche 1 bis 4,
**dadurch gekennzeichnet, daß** einem Produktspeicherplatz (xₙ, yₙ, zₙ) zumindest ein produktspezifischer Informationsspeicherplatz (wₙ) mit dem Produkt zugewiesenen Informationsdaten zugeordnet wird, vorzugsweise Informationen wie Produktstruktur, aufgetretene Fehlern, Kommentare, Prüfprotokolle, Produktsoftware oder Produktinfo.

6. Verfahren nach einem der Ansprüche 1 bis 5,
**dadurch gekennzeichnet, daß** einem Typspeicherplatz (an, bₙ, cₙ) zumindest ein typspezifischer Informationsspeicherplatz (dₙ) mit dem Serientyp zugewiesenen Informationsdaten zugeordnet wird, vorzugsweise Informationen wie Artikelstruktur, geeignetes Zubehör, Dokumentation, Prüfanweisungen oder Artikelinfos.

7. Verfahren nach einem der Ansprüche 1 bis 6,
**dadurch gekennzeichnet, daß** der Informationsspeicher (wₙ, dₙ) mehrere Datenspeicherplätze (60-64, 79-75) aufweist.

8. Verfahren nach einem der Ansprüche 1 bis 7,
**dadurch gekennzeichnet, daß** insbesondere nach Auslieferung und Inbetriebnahme des Produktes eines Produktspeicherplatzes (xₙ, yₙ, zₙ) festgestellte Fehler auf dem Fehlerspeicherplatz (74)des dem Produktspeicherplatz (xₙ, yₙ, zₙ) zugeordneten Informationsspeicherplatzes (wₙ) abrufbar protokolliert werden.

9. Verfahren nach einem der Ansprüche 1 bis 8,
**dadurch gekennzeichnet, daß** die Fehlerspeicherplätze (74) mehrerer Produktspeicherplätze (xₙ, yₙ, zₙ) von einem Auswertemodul (23) ausgelesen werden, daß das Auswertemodul (23) die aus den Speicherplätzen (41) ausgelesenen Informationsdaten auswertet und Summeninformationen generiert, und daß die Summeninformationen Produktspeicherplätzen (xₙ, yₙ, zₙ) und/oder Typspeicherplätzen (aₙ, bₙ, cₙ) auslesbar zur Verfügung gestellt werden.

10. Verfahren nach einem der Ansprüche 1 bis 8,
**dadurch gekennzeichnet, daß** auf einem Softwarespeicherplatz (75) die im Produkt und/oder Artikel installierte Anwendersoftware, Betriebssoftware, Firmware und/oder Treibersoftware insbesondere gespiegelt abgespeichert wird.

11. Verfahren nach einem der Ansprüche 1 bis 9,
**dadurch gekennzeichnet, daß** der Zugriff auf die Speicherplätze (aₙ, bₙ, cₙ, dₙ, xₙ, yₙ, zₙ ,wₙ) der Datenverarbeitungsanlage (12) über ein internes und/oder externes Netzwerk (16, 20) erfolgt.

12. Verfahren nach einem der Ansprüche 1 bis 10,
**dadurch gekennzeichnet, daß** jedes Produkt über ein Gateway (22) vorzugsweise online mit seinem zugewiesenen Speicherplatz (aₙ, bₙ, cₙ, dₙ) auf der Datenverarbeitungsanlage (12) in Verbindung steht.
